# EUROPEAN PATENT APPLICATION

(11) **EP 3 492 168 A1**
(43) Date of publication of application: **05.06.2019**
(21) Application number: 17834495.8
(22) Date of filing: 27.07.2017
(51) Int. Cl.: B01J 23/656, B01J 32/00, B01J 35/10, B01J 37/02, B01J 37/08, B01J 37/18, B64G 1/26

(54) **HAN-BASED PROPELLANT DECOMPOSITION CATALYST, PRODUCTION METHOD THEREFOR, AND MONOPROPELLANT THRUSTER USING SAME**

(30) Priority: 29.07.2016 JP 2016150512
(71) Applicant: IHI Corporation, Tokyo 135-8710 (JP); IHI Aerospace Co., Ltd., Koto-Ku Tokyo 135-0061 (JP)
(72) Inventor: KAMATA Hiroyuki, Tokyo 135-8710 (JP); IGARASHI Shinji, Tokyo 135-0061 (JP); YAMAMOTO Kengo, Tokyo 135-0061 (JP); FUKUCHI Aporo, Tokyo 135-0061 (JP)
(74) Representative: Grünecker Patent- und Rechtsanwälte PartG mbB
(86) International application number: PCT/JP2017/027306
(87) International publication number: WO 2018/021493

(57) **Abstract**

There are provided a stable HAN-based propellant decomposition catalyst in which the heat resistance is sufficient and the change in HAN-based propellant decomposition activity over time is also small so that a HAN-based propellant having low toxicity can be used for a thruster, and a method for producing the same, and a one-component thruster including a HAN-based propellant decomposition catalyst. A HAN-based propellant decomposition catalyst containing a hexaaluminate type oxide containing a platinum group element, and a method for producing the same, and a one-component thruster including a HAN-based propellant decomposition catalyst are used.

## Description

### Technical Field

Embodiments described herein relate to a HAN-based propellant decomposition catalyst for decomposing a hydroxyammonium nitrate (NH₂OH·HNO₃, hereinafter referred to as "HAN")-based propellant which is excellent in heat resistance and in which the change in catalytic activity over time is small, and a method for producing the same, and a one-component thruster comprising this HAN-based propellant decomposition catalyst.

### Background Art

A small propeller for the attitude and propulsion control of a satellite (hereinafter referred to as a " thruster") is an apparatus that decomposes hydrazine conventionally used as a propellant by a catalyst filled in the thruster, to generate high temperature gases to generate thrust.

The thruster is composed of a propellant valve for supplying a propellant, a gas generating portion, heat control equipment (a heater, a temperature sensor, and the like), and a hydrazine decomposition catalyst.

Here, hydrazine is useful as a single propulsion fuel used for a thrust apparatus such as a rocket. Hydrazine is decomposed by a decomposition catalyst and generates decomposed gases at high temperature in the decomposition, and therefore has been used for the operation of a jet for the attitude control of a rocket or an artificial satellite as well as having been used for a rust preventive in thermal power plants, and the like.

As the hydrazine decomposition catalyst, mainly a catalyst of a platinum group element has been used. When this decomposition catalyst is used for a thrust generating apparatus or a gas generating apparatus, a catalyst having the characteristics of high activity and moreover a long lifetime as a catalyst is needed. Particularly in order to cause spontaneous ignition in a rocket engine and stably control a rocket, a catalyst in which the change in catalytic activity over time is small and which can maintain stable activity is needed.

In addition, when hydrazine decomposes, a high temperature of 800°C or more is reached, and therefore when it is intended to provide the performance of reigniting many times, the catalyst also needs to have heat resistance.

As a catalyst having extremely high activity and excellent stability for addressing such problems, a hydrazine decomposition catalyst in which a precious metal such as Ir (iridium) is supported on alumina (Al₂O₃) having a large specific surface area is known (for example, see Patent Document 1).

As the hydrazine decomposition catalyst, generally Ir is used because of high activity, and specifically a catalyst in which Ir is supported on alumina is used.

The decomposition reactions of hydrazine are represented by the following formulas (i) and (ii):

2N₂H₄ -> 2NH₃ + N₂ + H₂ (i)

2NH₃ -> N₂ + 3H₂ (ii)

But, hydrazine that is a propellant has high toxicity, and therefore the development of a propellant that has lower toxicity, can decrease the environmental load, and is easy to produce and handle has been pursued. A HAN-based propellant has low toxicity, and therefore as a promising alternative candidate for hydrazine, currently studies are pursued at home and abroad.

When HAN is supplied to a catalyst, reactions represented by the following formula (iii) to (vi) proceed. These reactions are exothermic reactions and are volume-increasing reactions.

NH₃OHNO₃ (aq) -> 2H₂O (l) + N₂ (g) + O₂ (g) (iii)

NH₃OHNO₃ (aq) -> 2H₂O (l) + 1/2N₂ (g) + NO₂ (g or l) (iv)

NH₃OHNO₃ (aq) -> 2H₂O (l) + 2NO (g) (v)

NH₃OHNO₃ (aq) -> 2H₂O (l) + N₂O (g) + 1/2O₂ (g) (vi)

wherein aq represents an aqueous solution, g represents a gas, and 1 represents a liquid.

The HAN-based propellant has low toxicity but generally also has low reactivity. Therefore, in order to allow the decomposition reactions of a liquid HAN-based propellant with a catalyst to proceed stably, it has been needed to select a suitable catalyst. In addition, a problem of the HAN-based propellant has been that the temperature increase of a catalyst accompanying high temperature gas generation is intense, and the deterioration and wear of the catalyst increases.

Accordingly, for the catalyst for the HAN-based propellant, a catalyst that can more stably maintain activity than a conventional alumina catalyst for a hydrazine propellant in which Ir is supported has been needed.

On the other hand, when alumina used as a support for a catalyst is heat-treated, generally its specific surface area decreases significantly at 1000°C or more, and therefore the catalyst performance also tends to decrease (for example, see Non Patent Document 1).

Therefore, in order to use a HAN-based propellant having low reactivity compared with a hydrazine-based propellant as a propellant for a thruster for the attitude and propulsion control of a satellite, a catalyst in which the change in catalytic activity over time is small and which is stable and provides easy control of a thruster has been needed.

### Background Art Document

### Patent Document

Patent Document 1: Japanese Patent Publication No. 1-013900

### Non-Patent Document

Non-Patent Document 1: H. Arai et al, Applied Catalysis A: General), 138, pp 161-176, 1996

### Summary

### Technical Problem

The present disclosure has been made in view of the above circumstances, and an object of the present disclosure is to provide a stable HAN-based propellant decomposition catalyst in which the heat resistance is sufficient and the change in HAN-based propellant decomposition activity over time is also small so that a HAN-based propellant having low toxicity can be used for a thruster, and a method for producing the same.

Further, another object of the present disclosure is to provide a one-component thruster including a HAN-based propellant decomposition catalyst.

### Solution to Problem

The present inventors have studied diligently in order to solve the conventional problems, and as a result found that the problems can be solved by supporting a platinum group element such as Ir, Pt, Pd, Ru, or Rh (hereinafter sometimes simply referred to as a "platinum group element" on a hexaaluminate type oxide, which is also relatively excellent in heat resistance as a support for catalyst support, leading to the completion of the present disclosure.

The present disclosure will be described in detail below.

The present disclosure is a HAN (hydroxyammonium nitrate)-based propellant decomposition catalyst including a hexaaluminate type oxide containing a platinum group element. As the platinum group element, Ir, Pt, Pd, Ru, and Rh are preferable, and one of these can be used alone, or a combination of two or more of these can be used.

In addition, the present disclosure is a disclosure associated with the HAN-based propellant decomposition catalyst wherein the hexaaluminate type oxide is the following general formula (1):

R₁₋ₓZₓM_{y}Al_{12-y}O₁₉ (1)

wherein
R represents an alkaline earth metal element such as Ba, Sr, or Ca, or a lanthanoid element such as La, Ce, or Pr,
Z represents an element capable of replacing part of R,
M represents an element capable of replacing part of Al,
x represents a proportion of Z replacing R, and
y represents a proportion of M replacing Al.

Further, in the present disclosure, 3 to 20% by weight of the platinum group element may be contained, and also for the maintenance of catalytic activity, it is preferable that a BET specific surface area after heating at 1000°C for 1 hour is 60% or more based on a BET specific surface area before the heating.

In addition, the present disclosure is a disclosure associated with a method for producing a HAN-based propellant decomposition catalyst obtained by performing once or repeating a plurality of times a step of immersing a hexaaluminate type oxide in a solution containing a platinum group element compound, removing the hexaaluminate type oxide from the solution, and heating the hexaaluminate type oxide to 150 to 400°C.

In addition, the present disclosure is a disclosure associated with a one-component thruster including the above-described HAN-based propellant decomposition catalyst.

### Advantageous Effects

The present disclosure achieves the following effects:
1) A catalyst using the support used for the HAN-based propellant decomposition catalyst according to the present disclosure can stably maintain a specific surface area of 20 to 40 m²/g from the start of heat treatment. Particularly, the specific surface area is substantially fixed when only a short time elapses after the start of heat treatment. Thus, the HAN decomposition activity of the catalyst of the present disclosure can also be controlled in a fixed range.
2) By providing the catalyst of the present disclosure in a thruster, the attitude and propulsion control of a satellite by HAN decomposition reactions can be easily carried out.

### Brief Description of the Drawings

FIG. 1 is a diagram showing the crystal structures of hexaaluminates.
FIG. 2 is a cross-sectional explanatory diagram showing one embodiment of a one-component thruster according to the present disclosure.
FIG. 3 is a diagram showing the outline of a batch type small reaction apparatus for a propellant decomposition test using various catalysts in Example 2.
FIG. 4 shows the results of the propellant decomposition test performed using two catalysts (both Fresh) in Example 2.
FIG. 5 shows the results of a heat resistance evaluation test performed using three catalysts in Example 3.
FIG. 6 shows the results of measurements by catalyst analysis performed using three catalysts in Example 4.

### Description of Embodiments

A hexaaluminate type oxide, a HAN-based propellant decomposition catalyst and a method for producing the same, and a one-component thruster including this HAN-based propellant decomposition catalyst according to the present disclosure will be described below.

### <Hexaaluminate Type Oxide>

The HAN-based propellant decomposition catalyst of the present disclosure contains a hexaaluminate type oxide containing a platinum group element. In other words, an oxide having a hexaaluminate type structure is used as a support, and a compound including a platinum group element is supported on the support by treatment such as impregnation.

Examples of the platinum group element used in the HAN-based propellant decomposition catalyst of the present disclosure can include Ir, Pt, Pd, and Ru. These platinum group elements have the action of catalyzing the reaction of decomposing a HAN-based propellant.

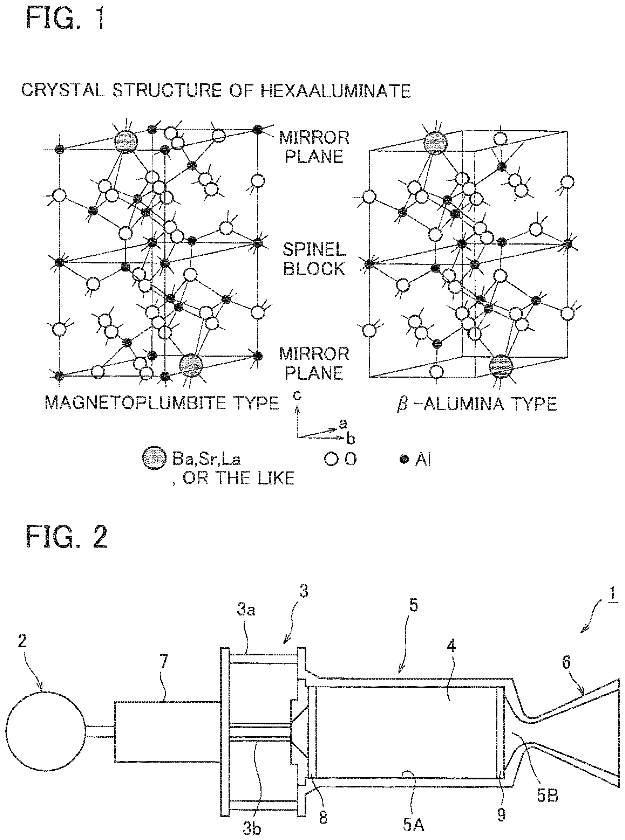

Here, examples of the hexaaluminate type structure in the hexaaluminate type oxide include two, the Magnetoplumbite type and the β-alumina type, as seen in FIG. 1 (from H. Arai et al, Applied Catalysis A: General), 138, pp 161-176, 1996). A platinum group element such as Ir having HAN-based propellant decomposition activity is supported on an oxide having this structure.

The hexaaluminate type oxide that is the support in the HAN-based propellant decomposition catalyst of the present disclosure is represented by the general formula RAl₁₂O₁₉. Examples of R include alkaline earth metals such as Ba, Sr, and Ca as well as lanthanoid elements such as La, Ce, and Pr as constituent elements. R and Al can be partially replaced by another element as follows.

Further, when the hexaaluminate type oxide that is the support in the HAN-based propellant decomposition catalyst of the present disclosure is specifically shown, it is represented by the following general formula (1):

R₁₋ₓZₓM_{y}Al_{12-y}O₁₉ (1)

wherein R represents an alkaline earth metal element such as Ba, Sr, or Ca, or a lanthanoid element such as La, Ce, or Pr. In other words, in general formula (1), as an element that can form the hexaaluminate type structure, examples of R include alkaline earth metal elements such as Ba, Sr, and Ca, and lanthanoid elements such as La, Ce, and Pr.

Part of the element represented by R in general formula (1) can be replaced by another element represented by Z. Z can be an element different from the element represented by R, among alkaline earth metal elements or lanthanoid elements.

As described above, R in general formula (1) can be replaced by Z, and in general formula (1), x represents the proportion of Z replacing R and is usually 0 to 1. In general formula (1), x = 0 indicates that there is no replacement by Z, and x = 1 means that all of R is replaced by Z.

Part of the Al element in general formula (1) can be replaced by another element M. The element M may be an element that can maintain the hexaaluminate type structure, and examples thereof can include Mn, Fe, Co, and Ni.

As described above, Al in general formula (1) can be replaced by the element represented by M, and in general formula (1), y represents the proportion of M replacing Al and is usually 0 to 2. In general formula (1), y = 0 indicates that there is no replacement by M, and y = 2 means that 2 atoms of 12 Al atoms are replaced by M.

As described above, the elemental compositions of the hexaaluminate type oxide represented by general formula (1) have been shown, but these elemental compositions are illustrations, and oxides having a hexaaluminate type structure can be used without limitation. In Examples described later, La_{0.8}Ba_{0.2}MnAl₁₁O₁₉ (in general formula (1), R = La, Z = Ba, M = Mn, x = 0.2, and y = 1.0) will be mentioned, and shown to achieve the effects of the present disclosure.

### <HAN-Based Propellant Decomposition Catalyst>

In the method for producing a HAN-based propellant decomposition catalyst according to the present disclosure, by using a powder of a raw material of a hexaaluminate type oxide and molding and firing the powder, a support before a platinum group element is supported on the support can be obtained.

Then, by performing once or repeating a plurality of times the step of immersing this support in a solution containing a compound of a platinum group element such as Ir, Pt, Pd, or Ru, for example, a solution of hexachloroiridic (IV) acid hydrate (H₂IrCl₆·nH₂O), hexachloroiridic (III) acid hydrate (IrCl₃·nH₂O), ammonium hexachloroiridate(IV) ((NH₄)₂IrCl₆, potassium hexachloroiridate(IV) (K₂IrCl₆), or the like for Ir, further removing the support from the solution, and heating the support to 150 to 400°C, the platinum group element such as Ir is supported on the support, and the HAN-based propellant decomposition catalyst of the present disclosure can be obtained.

In the above, a case where Ir (iridium) is supported on the support has been described, and the same applies to other platinum group elements. In the case of Pt (platinum), the support is immersed in a solution of hexachloroplatinic(IV) acid hydrate (H₂PtCl₆·nH₂O), ammonium hexachloroplatinate(IV) ((NH₄)₂PtCl₆), or the like. In the case of Pd (palladium), the support is immersed in a solution of palladium (II) chloride (PdCl₂) or the like. In the case of Ph (rhodium), the support is immersed in a solution of rhodium(III) chloride (PhCl₃), rhodium(III) nitrate (Ph(NO₃)₃, or the like. In the case of Ru (ruthenium), the support is immersed in a solution of ruthenium (III) chloride hydrate (RuCl₃·nH₂O), sodium ruthenate(VI) (Na₂RuO₄), potassium ruthenate(VI) (K₂RuO₄), or the like.

The HAN-based propellant decomposition catalyst obtained as described above has a BET specific surface area of about 20 to 40 m²/g and can maintain this relatively high specific surface area for a sufficient period, and therefore the HAN-based propellant decomposition activity can also be made stable.

The HAN-based propellant decomposition catalyst of the present disclosure retains the hexaaluminate type structure of the raw material powder even after molding and firing and also has heat resistance together with a relatively high specific surface area. The HAN-based propellant decomposition catalyst of the present disclosure stays in outer space as a thruster over a long period, and at the same time in order to properly perform orbit control, stable reactions are performed by the HAN-based propellant of the present disclosure, and the orbit control of the thruster can be properly performed. Therefore, it is needed to select such a catalyst that the decomposition reactions can proceed stably immediately after the reactions, and the catalyst containing the hexaaluminate type oxide according to the present disclosure is preferable.

The HAN-based propellant decomposition catalyst of the present disclosure is filled into the catalyst-filled layer of a thruster apparatus and is therefore preferably a molded body having a fixed particle diameter.

The method for molding a catalyst support before supporting a platinum group element such as Ir is not particularly limited as long as it is a method conventionally used in this field. For example, a method such as tumbling granulation, extrusion granulation, spray granulation, fluidized bed granulation, or compression granulation is used. In granulation, it is possible to add a binder and a granulation aid as needed, further add water, sufficiently knead these, and then mold the kneaded material using a granulator or the like.

The particle diameter of the molded body is not limited as long as it is a shape and a particle diameter at which the molded body can be filled into a thruster apparatus. In terms of the efficiency of work, the opening or mesh size of a mesh (mesh-like partition wall portion) provided in a thruster, and the like, a particle diameter of 0.1 to 5 mm is preferable, further a particle diameter of 0.5 to 2 mm is preferable, and the particle diameter is usually about 1 mm.

The method for supporting a platinum group element such as Ir on the molded catalyst support is not particularly limited as long as it is a method conventionally used in this field. Examples of the method include immersing the catalyst support that is a molded body in a solution of a compound of a platinum group element to impregnate the platinum group element as described above. The time of immersion in the solution of the compound of the platinum group element may also be appropriately selected, and, for example, the catalyst support may be immersed for several minutes or more. Particularly, by immersing the catalyst support under reduced pressure, the platinum group element such as Ir can be uniformly supported to the interior of the support.

The impregnation step is also not particularly limited as long as a method and the number of times conventionally used in this field are used. A series of steps such as impregnation, drying, and calcination (firing includes temporary firing, and "firing" and "temporary firing" mean heating an object) may be performed once or repeated a plurality of times.

Further, the supported catalyst may be washed with hot water at 50 to 60°C and dried because chlorine and the like derived from the raw material may remain.

When the catalyst in which the platinum group element such as Ir is supported is utilized, it can also be aerated in a gas flow of a reducing gas such as hydrogen (H₂) gas, for example, at a temperature of about 500°C, for 1 minute to several hours.

### <Thruster>

As shown in FIG. 2, this one-component thruster 1 is equipped with a tank 2 containing a HAN-based propellant, and an injector (HAN-based propellant introduction portion) 3, and mainly includes a chamber 5 filled with a catalyst layer 4 for decomposing the HAN-based propellant supplied from the tank 2 through this injector 3 to produce decomposed gases, and a nozzle 6 for ejecting the decomposed gases produced in this chamber 5 to obtain thrust. An electromagnetic valve 7 is placed between the tank 2 and a feed tube 3b constituting the injector 3 together with support rods 3a located on the tank 2 side of the chamber 5.

In the chamber 5, the space between an upstream side mesh (mesh-like partition wall portion) 8 for HAN-based propellant dispersion placed adjacent to the injector 3 and a downstream side mesh 9 placed in a portion near the nozzle 6 is a catalyst layer-containing portion 5A. On the other hand, the space between the downstream side mesh 9 and the nozzle 6 is a decomposed gas chamber 5B.

The catalyst layer 4 is a layer filled with catalyst particles in which about 20% by weight of a platinum group element such as Ir is supported on hexaaluminate type oxide particles and which usually have a particle diameter of about 1 mm.

In the one-component thruster 1, when the HAN-based propellant supplied from the tank 2 is introduced into the chamber 5 via the injector 3 and the upstream side mesh 8 by the valve opening operation of the electromagnetic valve 7, the HAN-based propellant comes into contact with the catalyst layer 4 to cause decomposition reactions. At the point in time when a steady state is reached in the chamber 5, the decomposition reactions of reaction formulas (iii) to (vi) described above occur, and the HAN-based propellant is decomposed into gases of nitrogen, oxygen, and nitrogen oxides (N₂O, NO, and NO₂) and water vapor at high temperature. By jetting these decomposed gases retained in the decomposed gas chamber 5B at high pressure from the nozzle 6, thrust is obtained.

The one-component thruster of the present disclosure uses a HAN-based propellant, and the HAN-based propellant has lower toxicity than conventional hydrazine propellants and is therefore easy to handle, and has the excellent performance of being able to maintain thrust at the same level as conventional propellants.

In the one-component thruster 1 according to this embodiment, the HAN-based propellant is diffused and supplied from the tip of one feed tube 3b constituting the injector 3, but this is not limiting, and it is possible to mount a shower head at the tip of the feed tube 3b and supply the HAN-based propellant from a plurality of places. The one-component thruster 1 may be configured to include a plurality of feed tubes.

### Examples

The present disclosure will be described below based on Examples, but the present disclosure is not construed as limited by these Examples.

### 1) Measurement of BET Specific Surface Area

The measurement of a BET specific surface area was performed at 77 K (absolute temperature) by a nitrogen (N₂) adsorption method using Autosorb iQ Station 1 manufactured by Quantachrome Instruments after treatment at a degassing temperature of 200°C as pretreatment.

### 2) Determination of Ir

The amount of Ir supported after catalyst preparation was analyzed by ICP (Inductively coupled plasma method).

### [Example 1] Production of Hexaaluminate Type Oxide Molded Body

### 1-1) Support

A hexaaluminate type oxide (composition formula: La_{0.8}Ba_{0.2}MnAl₁₁O₁₉, BET specific surface area 30 m²/g) that was a heat-resistant material was used as a support. For comparison, a catalyst using γ-phase alumina (manufactured by Iwatani Chemical Industry Co., Ltd., model RK40, BET specific surface area 259 m²/g, hereinafter designated as "γ-Al₂O₃") as a support was also used.

### 1-2) Preparation of Catalyst

Catalyst preparation conditions are shown in Table 1. A catalyst was prepared by an impregnation method with the amount of Ir supported being 20% by weight, using hexachloroiridic(IV) acid hydrate (H₂IrCl₆·nH₂O) as a starting material. For the support, the powder shown in 1-1) was used.

**[Table 1]**

| | | |
|---|---|---|
| Amount of Ir supported | 20 | wt% |
| | | |
| Support (powder) | 4 | 9 |
| Amount of Ir needed | 1.00 | 9 |
| | | |
| Ir concentration in Ir salt | 37.95 | wt% |
| Amount of Ir salt needed | 2.635 | 9 |
| | | |
| H2O | 30 | mL |
| | | |
| Firing | 400°C/1 hr | |
| Washing | 1 L/sample | |
| Reduction | 500°C/1 hr | |

The impregnation was carried out while the pressure was reduced by an evaporator. After the impregnation, calcination (400°C, 1 hr (hour)) was performed in the air, and then the sample was washed with de-ionized water in order to remove chlorine remaining in the sample. Finally, the sample was reduced in a H₂ gas flow (100% H₂) under the conditions of 500°C/1 hr and used for a propellant decomposition test. After the reduction with H₂, the temperature was lowered, then the system was purged with N₂ gas, and then the sample was removed.

### 1-3) Catalyst Used for Propellant Decomposition Test

The propellant decomposition test was performed using a catalyst obtained by pelletizing the obtained powder of the Ir catalyst in the form of pellets followed by grinding and sieving (510 to 700 µm).

### [Example 2] Propellant Decomposition Test (Using Fresh Catalysts)

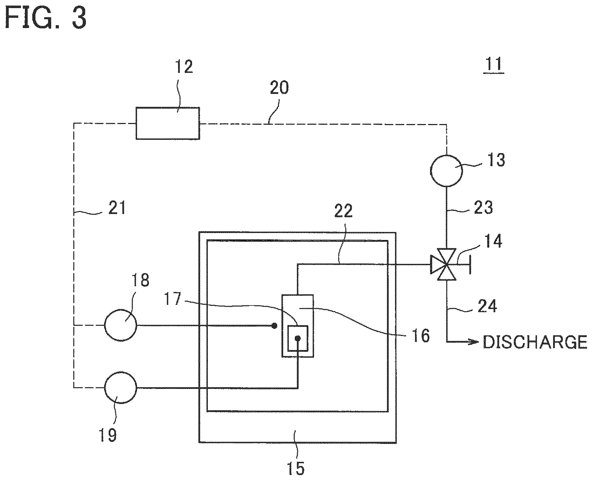

The prepared catalysts were evaluated by temperature controlled oven using the batch type small reaction apparatus 11 for a propellant decomposition test shown in FIG. 3.

A test by the batch type small reaction apparatus 11 shown in FIG. 3 was performed as follows. In other words, a closed metal container 16 is provided in a constant temperature oven 15, and each of various catalysts and a propellant are retained in the closed metal container 16. This thermocouple 19 is provided for the interior of the closed metal container 16, the other thermocouple 18 is provided for the temperature controlled oven 15, and these thermocouple 18 and thermocouple 19 are connected to the data logging system (computer) 12 via a cable 21.

The closed metal container 16 is connected to a valve 14 via a pipe 22 on the closed metal container side and connected to a pressure gauge 13 via a pipe 23 on the pressure gauge side from the valve 14. The pressure gauge 13 is connected to the data logging system (computer) 12 via a cable 20. The valve 14 discharges gases and the like to the outside via a pipe 24 on the discharge side.

In the propellant decomposition test, the temperature of the temperature controlled oven 15 is gradually increased, and at the same time the temperatures of the closed metal container 16 in the interior of the temperature controlled oven 15, and further the catalyst and the propellant in the closed metal container 16 also increase. These, the temperatures of the temperature controlled oven 15 and the interior of the closed metal container 16, are detected by the thermocouple 18 for the temperature controlled oven 15 and the thermocouple 19 for the interior of the closed metal container 16, sent to the control means 12 via the cable (thermocouple side) 21, and recorded. The temperatures of the catalyst and the propellant 17 retained in the interior of the closed metal container 16 increase, and at a certain temperature, the propellant decomposes, and the pressure increases due to gases generated by the decomposition. This pressure is detected over time by the pressure gauge 13, sent to the control means 12 via the cable (pressure gauge side) 20, and recorded.

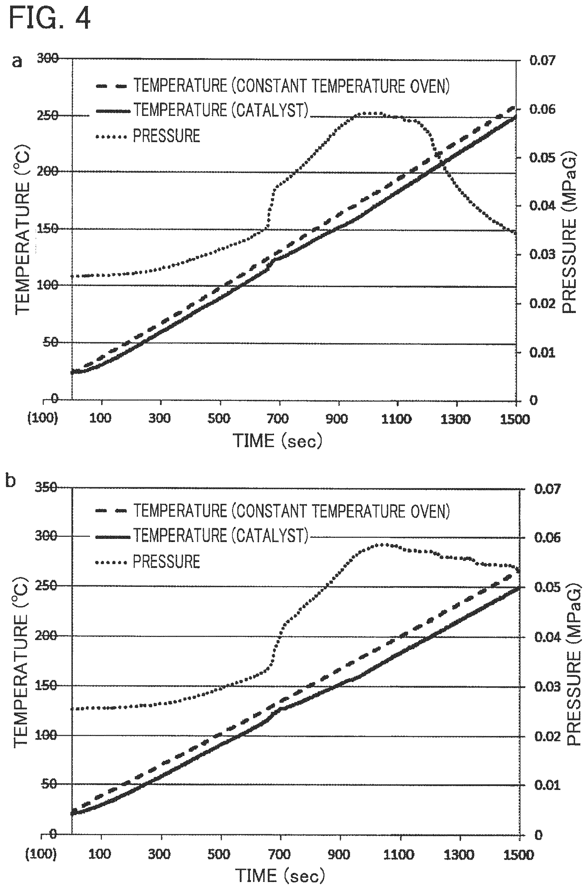

As the propellant decomposition test of the prepared catalysts, 50 mg of the catalyst (510 to 700 µm) and 50 µL (microliters) of a propellant were placed in the batch type small reaction apparatus 11 shown in FIG. 3, and then the reactor was sealed. While the temperature and the pressure in the reactor were measured, the temperature of the temperature controlled oven was increased to 300°C at 10°C/min (minute). From pressure and temperature changes in the reactor, the propellant decomposition characteristics of the catalyst were evaluated as changes in temperature controlled oven temperature, catalyst temperature, and pressure over time. The results are shown in FIG. 4a and FIG. 4b.

FIG. 4a and FIG. 4b are diagrams showing the relationships between reaction time (X axis, the unit is seconds) and changes in constant temperature oven temperature (broken line, the numerical values are on the left side of the Y-axis, the unit is °C), catalyst temperature (solid line, the numerical values are on the left side of the Y-axis, the unit is °C), and pressure over time (dotted line, the numerical values are on the right side of the Y-axis, the unit is MPaG) as the results of the propellant decomposition test performed using two catalysts (both Fresh).

FIG. 4a shows the results of the catalyst of the present disclosure synthesized (20%Ir/La_{0.8}Ba_{0.2}MnAl₁₁O₁₉ catalyst (Fresh)). As shown in FIG. 4a, the temperature at which the decomposition reactions of the propellant started was 115°C.

FIG. 4b shows the results of the Ir/γ-type alumina catalyst (Fresh) that is a comparative control. As shown in FIG. 4b, the temperature at which the decomposition reactions of the propellant started was about 118°C.

### [Example 3] Heat Resistance Evaluation Test

In order to evaluate the heat resistance of catalysts, the prepared catalysts (Fresh) were heat-treated at 1000°C under the air atmosphere, and then the propellant decomposition test was carried out as in Example 2. The time of the heat treatment was set at 1, 5, 20, and 40 hr (hours), and before the propellant decomposition test, reduction treatment with H₂ was performed.

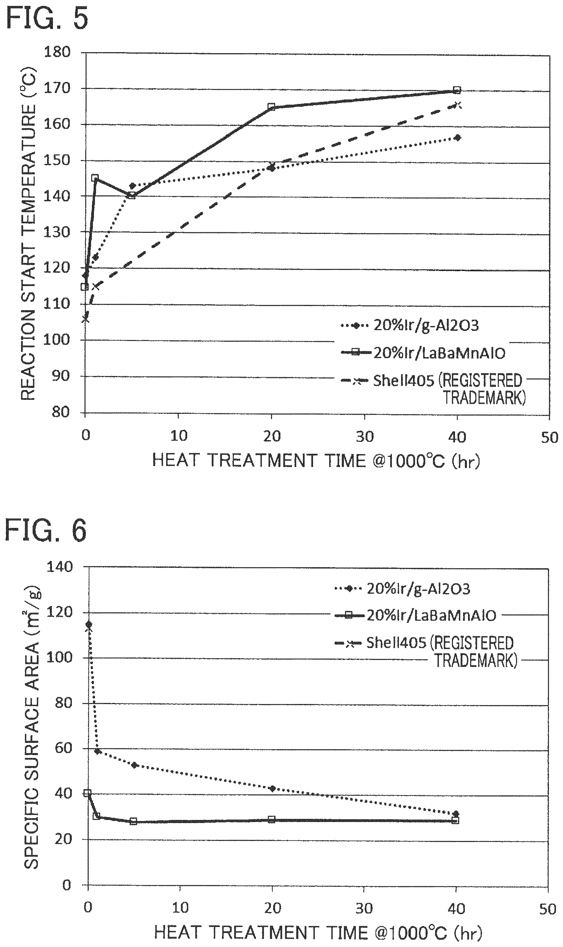

The results of the propellant decomposition test, propellant decomposition start temperatures (reaction start temperatures), are shown in the following Table 2 and FIG. 5. FIG. 5 is a diagram showing the relationships between heat treatment time at 1000°C (X axis, the unit is hours) and reaction start temperature (Y axis, the unit is °C) as the results of the heat resistance evaluation test performed using three catalysts. In the diagram, ◆ (dotted line) shows the results of the Ir/γ-type alumina catalyst that is a comparative control (containing 20% by weight of Ir and designated as "20%Ir/g-Al2O3"), □ (solid line) shows the results of the catalyst of the present disclosure synthesized (the catalyst contains 20% by weight of Ir, the composition is La_{0.8}Ba_{0.2}MnAl₁₁O₁₉, and the catalyst is designated as "20%Ir/LaBaMnAlO"), and × (broken line) shows the results of a Shell 405 (registered trademark) catalyst that is a comparative control.

**[Table 2]**

| | | Heat treatment time (hr) | Reaction start temperature (°C) | 40hr/1hr |
|---|---|---|---|---|
| Shell(registered trademark)405 | Fresh | 0 | 106 | |
| | 1000°C 1 hr treatment | 1 | 115 | |
| | 1000°C 20hr treatment, H₂ reduction | 20 | 149 | |
| | 1000°C 40hr treatment, H2 reduction | 40 | 166 | 1.4 |
| | | | | |
| 20%Ir/γ-Al₂O₃ | Fresh | 0 | 118 | |
| | 1000°C 1hr treatment | 1 | 123 | |
| | 1000°C 5hr treatment, H₂ reduction | 5 | 143 | |
| | 1000°C 20hr treatment, H₂ reduction | 20 | 148 | |
| | 1000°C 40hr treatment, H₂ reduction | 40 | 157 | 1.3 |
| | | | | |
| 20%Ir/La_{0.8}Ba_{0.2}MnAl₁₁O₁₉ | Fresh | 0 | 115 | |
| | 1000°C 1hr treatment | 1 | 145 | |
| | 1000°C 5hr treatment, H₂ reduction | 5 | 140 | |
| | 1000°C 20hr treatment, H₂ reduction | 20 | 165 | |
| | 1000°C 40hr treatment, H₂ reduction | 40 | 170 | 1.2 |

As seen from Table 2 and FIG. 5, the propellant decomposition reaction start temperature tends to increase as the heat treatment time increases. The decomposition reaction start temperature after a heat treatment time of 1 hr, at an initial stage after the start of the heat treatment, was 115°C for the Shell 405 (registered trademark) catalyst, 123°C for the 20%Ir/γ-Al₂O₃ catalyst, and 145°C for the 20%Ir/La_{0.8}Ba_{0.2}MnAl₁₁O₁₉ catalyst. In contrast to this, the decomposition reaction start temperature after a heat treatment time of 40 hr was 166°C for the Shell 405 (registered trademark) catalyst, 157°C for the 20%Ir/γ-Al₂O₃ catalyst, and 170°C for the 20%Ir/La_{0.8}Ba_{0.2}MnAl₁₁O₁₉ catalyst.

When the ratio of the decomposition reaction start temperature after a heat treatment time of 40 hr to the decomposition reaction start temperature after a heat treatment time of 1 hr as shown in Table 2 as "40hr/1hr" is seen, it is seen that the ratio is the lowest, 1.2, for the 20%Ir/La_{0.8}Ba_{0.2}MnAl₁₁O₁₉ catalyst of the present disclosure, indicating that for the catalytic activity at the initial stage of the heat treatment, activity at the same level also tends to be able to be subsequently continuously maintained. It is seen that this means that the 20%Ir/La_{0.8}Ba_{0.2}MnAl₁₁O₁₉ catalyst of the present disclosure is a HAN-based propellant decomposition catalyst with which stable control is possible when it is incorporated into a thruster and the attitude and propulsion control of a satellite is performed.

### [Example 4] Catalyst Analysis

In FIG. 6, as the results of measurement by catalyst analysis performed using three catalysts, the 20%Ir/γ-Al₂O₃ catalyst, the 20%Ir/La_{0.8}Ba_{0.2}MnAl₁₁O₁₉ catalyst, and the Shell (registered trademark) 405 catalyst were used. FIG. 6 shows the relationships between heat treatment time at 1000°C (X axis, the unit is hours, designated as "heat treatment time @1000°C") and specific surface area (Y axis, the unit is m²/g hour, designated as "specific surface area (m²/g)"). In the diagram, ◆ (dotted line) shows the results of the Ir/γ-type alumina catalyst that is a comparative control (containing 20% by weight of Ir and designated as "20%Ir/g-Al2O3"), □ (solid line) shows the results of the catalyst of the present disclosure synthesized (the catalyst contains 20% by weight of Ir, the composition is La_{0.8}Ba_{0.2}MnAl₁₁O₁₉, and the catalyst is designated as "20%Ir/LaBaMnAlO"), and × shows the result of the Shell 405 (registered trademark) catalyst that is a comparative control. For the Shell 405 (registered trademark) catalyst, only data at 0 hr is shown.

As seen from Table 2 and FIG. 5, the BET specific surface areas of the catalysts tend to decrease as the heat treatment time increases.

The 20%Ir/γ-Al₂O₃ catalyst had the largest decrease rate, and the BET specific surface area of 115 m²/g for Fresh decreased to 32 m²/g after 40 hr. In addition, for the Shell 405 (registered trademark) catalyst, data for only Fresh (a BET specific surface area of 113 m²/g) is shown, but considering the data on the catalytic activity (reaction start temperature) over time in FIG. 5 in Example 3, it seems that like the 20%Ir/γ-Al₂O₃ catalyst, the tendency of the BET specific surface area to decrease as the heat treatment time elapses continues. In contrast to this, the 20%Ir/La_{0.8}Ba_{0.2}MnAl₁₁O₁₉ catalyst shows a stable tendency compared with the 20%Ir/γ-Al₂O₃ catalyst. In other words, for the 20%Ir/La_{0.8}Ba_{0.2}MnAl₁₁O₁₉ catalyst, the specific surface area itself is relatively low compared with other catalysts, 40 m²/g, for Fresh, but from the 1st hr, the BET specific surface area hardly decreases, that is, the surface area of the catalyst does not fluctuate, and from this, it is seen that the 20%Ir/La_{0.8}Ba_{0.2}MnAl₁₁O₁₉ catalyst is a catalyst having a stable structure.

The changes in specific surface area shown above show relatively good agreement with catalyst performance. For the 20%Ir/γ-Al₂O₃ catalyst in which the tendency of the BET specific surface area to decrease is the largest, the propellant decomposition temperature also tends to increase in the performance test. In contrast to this, for the 20%Ir/La_{0.8}Ba_{0.2}MnAl₁₁O₁₉ catalyst of the present disclosure in which the BET specific surface area is the most stable, the increase in propellant decomposition start temperature tends to be stable as the heat treatment time increases.

The above results mean that when a catalyst heat-treated for a predetermined time is used, a catalyst that can maintain a fixed surface area in temperature increase accompanying subsequent heat treatment or the decomposition of a propellant is provided. This agrees with the fact that for the catalyst of the present disclosure, the propellant decomposition start temperature in Example 3 tends to be fixed compared with other catalysts after a lapse of 1 hr at 1000°C, meaning that a more stable catalyst, and in turn a catalyst that can exhibit the effect of being able to easily perform the thrust control of a thruster and is useful is provided.

It is considered that when the specific surface area of a catalyst is higher, the degree of dispersion of a precious metal having catalytic activity such as Ir is also higher, and the specific surface area is also higher. Therefore, it is considered that maintaining the degree of dispersion of a precious metal such as Ir is effective for the improvement of heat resistance. In other words, by using a hexaaluminate type oxide such as a La_{0.8}Ba_{0.2}MnAl₁₁O₁₉ catalyst as a support, the heat resistance of a catalyst can be improved, and by using a catalyst whose heat resistance is improved, a catalyst that can stably decompose a propellant even at high temperature can be provided.

### Explanation of Reference Signs

1 one-component thruster
2 tank
3 injector (hydrazine introduction portion)
3a support rod
3b feed tube (injector)
4 catalyst layer
5 chamber
5A catalyst layer-containing portion
5B decomposed gas chamber
6 nozzle
7 electromagnetic valve
8 upstream side mesh (mesh-like partition wall portion)
9 downstream side mesh (mesh-like partition wall portion)
11 batch type small reaction apparatus
12 control means
13 pressure gauge
14 valve
15 constant temperature oven
16 closed metal container
17 catalyst and propellant
18 thermocouple
19 thermocouple
20 cable
21 cable
22 pipe
23 pipe
24 pipe

## Claims

1. A HAN-based propellant decomposition catalyst comprising a hexaaluminate type oxide containing a platinum group element.

2. The HAN-based propellant decomposition catalyst according to claim 1, wherein the hexaaluminate type oxide is the following general formula (1):
R₁₋ₓZₓM_{y}Al_{12-y}O₁₉ (1)
wherein
R represents an alkaline earth metal element or a lanthanoid element,
Z represents an element capable of replacing part of R,
M represents an element capable of replacing part of Al,
x represents a proportion of Z replacing R, and
y represents a proportion of M replacing Al.

3. The HAN-based propellant decomposition catalyst according to claim 1 or claim 2, containing 3 to 20% by weight of the platinum group element.

4. The HAN-based propellant decomposition catalyst according to any one of claims 1 to 3, wherein the platinum group element is Ir, Pt, Pd, or Ru.

5. The HAN-based propellant decomposition catalyst according to any one of claims 1 to 4, wherein a BET specific surface area after heating at 1000°C for 1 hour is 60% or more based on a BET specific surface area before the heating.

6. A method for producing a HAN-based propellant decomposition catalyst, comprising performing once or repeating a plurality of times a step of immersing a hexaaluminate type oxide in a solution comprising a platinum group element compound, removing the hexaaluminate type oxide from the solution, and heating the hexaaluminate type oxide to 150 to 400°C.

7. A one-component thruster comprising the HAN-based propellant decomposition catalyst according to any one of claims 1 to 5.
